(19) Europäisches Patentamt
European Patent Office
Office européen des brevets

(11) **EP 3 728 793 B1**

(12) **FASCICULE DE BREVET EUROPEEN**

(45) Date de publication et mention de la délivrance du brevet:
**08.03.2023 Bulletin 2023/10**

(21) Numéro de dépôt: **18833285.2**

(22) Date de dépôt: **17.12.2018**

(51) Classification Internationale des Brevets (IPC):
*F01D 5/18* (2006.01)     *F01D 9/04* (2006.01)
*F01D 9/06* (2006.01)     *F01D 25/12* (2006.01)
*F02K 3/06* (2006.01)     *F02K 3/105* (2006.01)

(52) Classification Coopérative des Brevets (CPC):
**F01D 9/065; F01D 5/187; F01D 9/041; F01D 25/12;
F02K 3/06; F02K 3/105;** F05D 2220/36;
F05D 2240/12; F05D 2260/20

(86) Numéro de dépôt international:
**PCT/FR2018/053335**

(87) Numéro de publication internationale:
**WO 2019/122657 (27.06.2019 Gazette 2019/26)**

(54) **AUBE FIXE DE REDRESSEUR D'UNE SOUFFLANTE DE TURBOMACHINE**

LEITSCHAUFEL EINES TURBOMASCHINENGEBLÄSES

GUIDE VANE OF A TURBOMACHINE FAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2017 FR 1762890**

(43) Date de publication de la demande:
**28.10.2020 Bulletin 2020/44**

(73) Titulaire: **SAFRAN AIRCRAFT ENGINES
75015 Paris (FR)**

(72) Inventeur: **BORDONI, Nils, Edouard, Romain
77550 MOISSY-CRAMAYEL (FR)**

(74) Mandataire: **Brevalex
Tour Trinity
1 Bis Esplanade de La Défense
CS 60347
92035 Paris La Défense Cedex (FR)**

(56) Documents cités:
EP-A1- 3 179 048     EP-A2- 2 383 437
WO-A1-02/38938     US-A1- 2014 165 570
US-A1- 2017 284 417

## Description

Le sujet de l'invention est une aube fixe de redresseur d'une soufflante de turbomachine, un redresseur de soufflante de turbomachine, ainsi qu'une turbomachine.

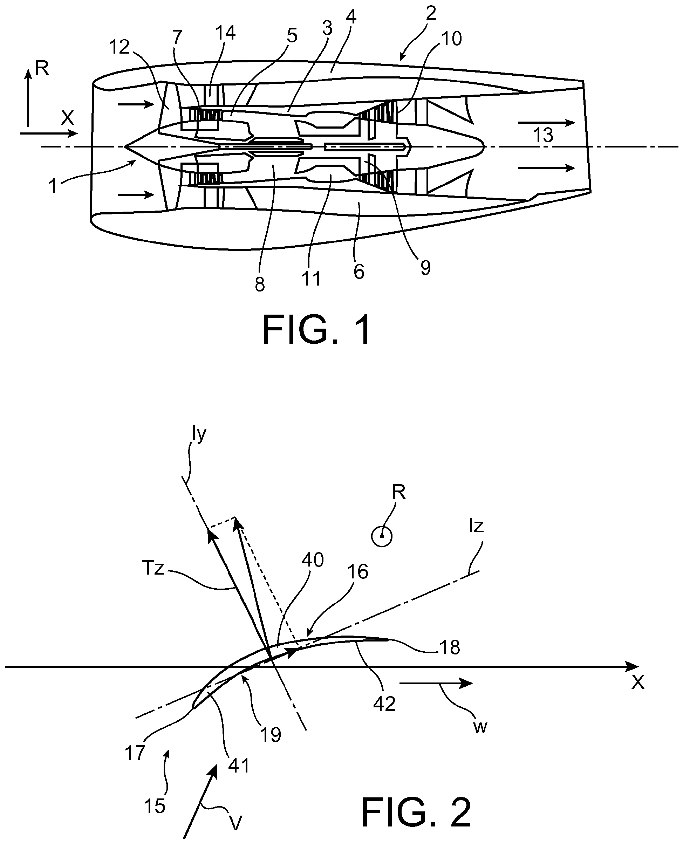

Certaines turbomachines connues comportent un double flux, et on en fera une description succincte au moyen de la figure 1. Le rotor 1 est entouré par un stator 2 comportant un carter intérieur 3, appelé aussi moyeu, et un carter extérieur 4, appelé aussi virole, concentriques. Une veine primaire 5 s'étend entre le rotor 1 et le carter intérieur 3, et une veine secondaire 6 entre le carter intérieur 3 et le carter extérieur 4. Des compresseurs 7, 8, puis des turbines 9, 10 s'étendent le long de la veine primaire 5 en amont et en aval d'une chambre de combustion 11. La machine comprend encore une soufflante 12 en amont des veines 5 et 6, composée d'aubes tournantes dont les sommets s'étendent jusqu'au carter extérieur 4, et à l'opposé, une tuyère 13 où les veines 5 et 6 convergent et leurs flux se rejoignent. Les aubes de la soufflante 12 offrent une première accélération à l'air entrant dans la machine, jointe à une compression et à une composante importante hélicoïdale de mouvement. Un redresseur 14, composé d'aubes fixes (souvent appelées OGV ou « Outlet Guide Vanes »), est ajouté pour redresser l'écoulement dans la veine extérieure 6, c'est-à-dire pour atténuer cette composante hélicoïdale d'écoulement. Les aubes fixes s'étendent dans la veine extérieure 6 et comprennent encore une partie d'extrémité, telle qu'une plate-forme, radialement intérieure reliée au carter intérieur 3, et une partie d'extrémité opposée, radialement extérieure et pouvant aussi être une plate-forme, reliée au carter extérieur 4. Dans certaines conceptions, les aubes du redresseur 14 ont un rôle structural, d'assurer la suspension du carter intérieur 3 à l'exclusion éventuellement de toute autre structure.

Une autre fonction possible pour les aubes du redresseur 14 est de permettre un échange de chaleur entre l'air de la veine extérieure 6 et un fluide caloporteur tel que l'huile lubrifiant la machine, entraînée dans un circuit de recyclage et soumise à un échauffement important. On lui fait parcourir pour cela des branches du circuit qui passent à travers certaines au moins des aubes du redresseur 14, puisque la veine extérieure 6 reste une partie froide de la machine, en l'absence de combustion des gaz, et la compression des gaz par la soufflante 12 étant modérée.

On observe que les aubes du redresseur 14 sont fortement sollicitées par la pression du flux secondaire et subissent des flexions qui peuvent être importantes. Comme le montre la figure 2, des filets d'air incidents V arrivent sur les aubes 15 du redresseur 14 en faisant un angle avec elles dans la région de bords d'attaque 17, avant d'être redressés pour former un écoulement de sortie W sensiblement dans la direction axiale X de la machine, après avoir glissé sur des faces d'intrados 19 et quitté les aubes 15 par des bords de fuite 18. Les sollicitations exercées par la réaction de l'air sur les aubes 15 qui le dévient se traduisent par des forces de flexion. On va maintenant considérer une division de l'aube 15 en sections empilées, dont chacune est à une hauteur, ou à une position radiale, uniforme, entre les extrémités de l'aube 15 raccordées au carter intérieur 3 et au carter extérieur 4. Ces sections de l'aube 15, perpendiculaires à une direction radiale R perpendiculaire à la direction axiale X, possèdent des moments quadratiques d'inertie (calculables par la formule classique

$$I = \sum_{}^{s} m\, r^2$$

où m est la masse d'un point de la section S, et r sa distance à l'axe passant par la section, autour duquel le moment est calculé) qui permettent de définir deux axes principaux d'inertie, autour desquels les moments quadratiques sont respectivement maximal et minimal. Le premier de ces axes principaux est noté Iy et correspond à l'axe autour duquel l'aube 15 a la rigidité en flexion la plus grande, et l'autre est noté Iz et correspond à l'axe autour duquel sa rigidité en flexion est la plus petite. L'aube 15 sera donc fléchie à chacune de ses sections, surtout autour de l'axe Iz par la composante notée Tz des efforts exercés sur la section S, perpendiculaire à cet axe Iz qu'on va considérer en rapport avec l'invention. L'axe principal d'inertie Iz fait typiquement un angle assez petit (20° à 30°) avec la direction axiale X de la machine et divise la section de l'aube 15 en une région centrale 40, limitée aussi par la portion centrale d'une face d'extrados 16, et une région complémentaire, comprenant le bord d'attaque 17 et le bord de fuite 18, et ici divisée en deux régions extrêmes 41 et 42, comprenant respectivement ces bords.

Le cumul des efforts de pression sur toutes les sections des aubes 15 a pour effet de les déformer en flexion dans la direction angulaire de la machine, et de produire une rotation du carter extérieur 4 qui a divers inconvénients : flexion et désalignement des servitudes passant par les aubes 15 ou en aval d'elles, désalignement de l'arbre radial (utilisé pour la transmission de puissance entre la turbomachine proprement dite et des équipements annexes de démarreurs, générateurs, etc.) avec une usure accrue des paliers et dentures d'engrenages, et, dans le cas d'une suspension du carter intérieur 3 par les aubes 15, un désalignement des structures de nacelle et un blocage possible des inverseurs de poussée.

Un but principal de l'invention a été de contrecarrer cette rotation due à la composante hélicoïdale de l'écoulement d'air issu de la soufflante 12 et la flexion correspondante des aubes 15 du redresseur 14.

L'art antérieur proche comprend WO 02/38938 A1, US 2014/165570 A1, EP 3 179 048 A1 et US 2017/284417 A1.

Un premier aspect de l'invention est une aube fixe de redresseur d'une soufflante de turbomachine, comprenant deux extrémités opposées destinées à être montées sur un carter intérieur et un carter extérieur, concentrique au carter intérieur, de la turbomachine, l'aube étant creuse et parcourue par un conduit principal de circulation d'un fluide caloporteur refroidi en circulant dans l'aube, et s'étendant, à partir d'une entrée du fluide à une première des extrémités de l'aube, dans au moins une partie de hauteur de l'aube, l'aube étant composée de sections planes et empilées, chacune à une position uniforme dans une direction radiale de la turbomachine et chacune composées d'une région centrale et d'au moins une région extrême de part et d'autre d'un axe principal d'inertie de flexion de la section (et appartenant donc au plan de la section), la région extrême incluant un bord d'attaque et un bord de fuite de l'aube, telle que, dans chaque section d'aube de la partie de hauteur de l'aube, le conduit principal s'étend seulement dans la région centrale, ledit axe principal d'inertie étant un axe autour duquel la section a un moment quadratique d'inertie minimal et l'aube a une rigidité en flexion la plus petite ; l'aube est aussi parcourue, dans la partie de hauteur de l'aube, par des conduits latéraux de circulation du fluide s'étendant entre le conduit principal et, respectivement, le bord d'attaque et le bord de fuite de l'aube, les conduits latéraux s'étendant entre une sortie du fluide et un premier raccord, joignant des extrémités des conduits latéraux à une extrémité du conduit principal, et les conduits latéraux s'étendent, dans chaque section de la partie de hauteur de l'aube, dans ladite région extrême.

L'effet technique de l'invention peut être résumé comme ceci. La flexion, s'exerçant dans l'aube entre son rayon intérieur et son rayon extérieur, la déforme en exerçant une contraction dans la région centrale et une dilatation dans les régions extrêmes. Le fluide parcourant la cavité de l'aube étant plus chaud, il produit des dilatations thermiques. En faisant exercer cette dilatation dans la région centrale, l'aube subit une dilatation thermique différentielle qui produit une flexion opposée à la flexion produite par les efforts aérodynamiques, et réduit ou annule donc la rotation du carter extérieur par rapport au carter intérieur.

Cette disposition peut être retenue ou non pour toute la hauteur des aubes ou pour une portion seulement de cette hauteur, par exemple à l'endroit où la compression aérodynamique est la plus forte.

En renforçant les aubes 15 de cette façon, il sera possible de les alléger en renonçant à des renforts statiques ou des augmentations d'épaisseur indispensables autrement.

Comme l'aube est aussi parcourue, dans la partie principale, par des conduits secondaires de circulation du fluide assurant le retour de celui-ci vers le circuit de lubrification en sens opposé au conduit principal, et que les conduits secondaires s'étendent dans les régions extrêmes, les retours du fluide, refroidi et donc moins apte à contribuer à la dilatation thermique différentielle, restent à l'écart de la région centrale, qui peut être occupée plus complètement par le conduit principal, plus utile à l'effet de l'invention.

Le conduit principal central, et les conduits secondaires, quand ils existent, peuvent tous être divisés en conduits parallèles sans changer à la nature de l'invention. Dans des réalisations complexes, on pourra donc trouver un réseau de conduits dans la région centrale, assurant plus particulièrement l'effet de l'invention et occupant éventuellement toute la région centrale ou la plupart de sa superficie, et un ou deux réseaux de conduits secondaires d'un côté ou des deux côtés du réseau central, éventuellement mais pas nécessairement disposés dans les régions extrêmes, sans imbrication des réseaux les uns dans les autres, l'axe principal d'inertie les séparant complètement dans des réalisations particulièrement caractéristiques.

Un autre aspect de l'invention est un redresseur de soufflante de turbomachine, pouvant être à double flux, comprenant un étage d'aubes fixes selon ce qui précède. Ce redresseur peut être situé immédiatement en aval d'une soufflante.

Et une réalisation préférée du redresseur est caractérisée par un agencement d'inversion de sens de circulation du fluide soit dans le conduit principal, soit dans les conduits latéraux.

Les différents aspects, caractéristiques et avantages de l'invention seront maintenant décrits plus en détail au moyen des figures suivantes, qui représentent certaines réalisations préférées, mais purement illustratives de celle-ci :

- la figure 1, déjà décrite, représente une turbomachine à double flux ;
- la figure 2, également décrite, évoque le problème technique résolu par l'invention ;
- la figure 3 représente une coupe transversale d'une aube conforme à l'invention ;
- la figure 4 représente une vue en perspective de l'aube ; et
- les figures 5 et 6 représentent chacune une illustration schématique d'une variante de réalisation.

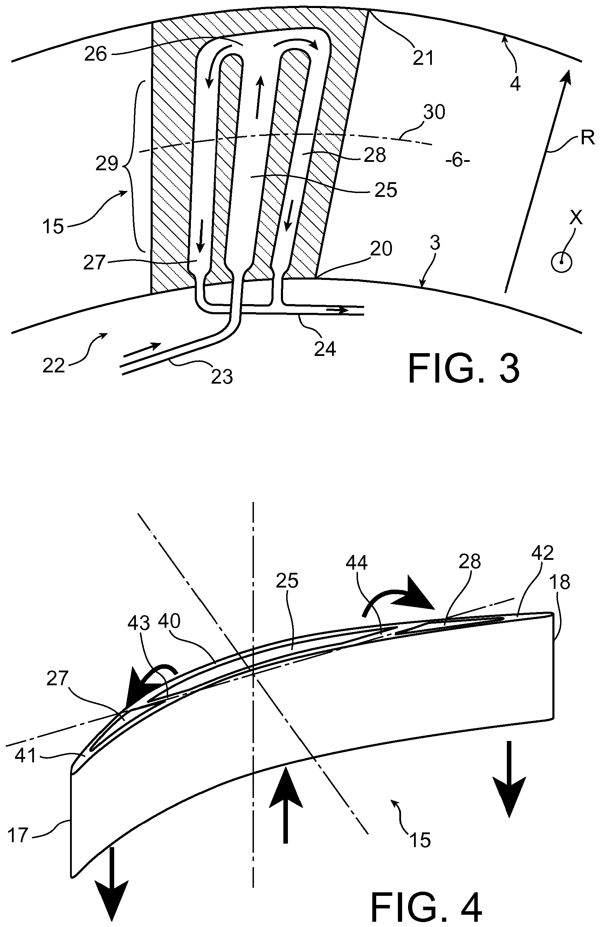

On se reporte directement aux figures 3 et 4. L'aube 15 équipée de l'invention comporte une extrémité intérieure 20 fixée au carter intérieur 3, et une extrémité extérieure 21 fixée au carter extérieur 4. Un circuit de lubrification 22 à l'huile est présent dans la machine, par exemple sous le carter intérieur 3. Il comprend un conduit d'alimentation 23 par laquelle l'huile entre dans l'aube 15 situé en aval d'un dispositif lubrifié où l'huile a été exposée à des frottements et des contacts de solides chauds (paliers par exemple) ; l'huile est alors chaude, et apte à céder une chaleur plus importante à l'aube 15, et y produire une dilatation thermique locale plus grande. Le circuit comprend encore un conduit de sortie 24 par lequel l'huile sort de l'aube 15 ; l'huile qui a alors été refroidie par le passage dans l'aube 15, est moins apte à céder de la chaleur, et produit des dilatations thermiques locales plus petites. Le conduit d'alimentation 23 se prolonge dans l'aube 15 par une cavité appelée conduit central 25, dans lequel l'huile s'élève en direction radiale R ou de hauteur de l'aube 15 avant d'arriver à un raccord dit supérieur 26 (d'après l'orientation de la figure 3, où « supérieur » équivaut à « plus proche du carter extérieur 4 ») où l'écoulement d'huile se disperse avant de retomber dans des conduits latéraux 27 et 28, parallèles au conduit central 25 et que l'huile refroidie parcourt en sens inverse, vers l'extrémité intérieure 20, avant de rejoindre le conduit de sortie 24 qui ramène l'huile au dispositif lubrifié. Les conduits 25, 27 et 28 s'étendent sur une partie 29 de hauteur de l'aube 15 qui peut englober toute la hauteur ou presque de l'aube 15, et il est en tout cas avantageux qu'ils s'étendent à travers une portion principale, englobant la ligne de mi-hauteur 30 (à mi-distance radiale des carters 3 et 4) et pouvant comprendre environ la moitié de la hauteur de l'aube 15 entre lesdits carters 3 et 4. Le raccord supérieur 26 peut être proche de l'extrémité extérieure 21, mais cette condition n'est pas indispensable. Dans d'autres réalisations possibles de l'invention, le circuit de lubrification 22 pourrait s'étendre dans le carter extérieur 4, et la disposition générale des conduits 25, 27 et 28 serait alors inversée. Dans d'autres réalisations encore possibles, les conduits 27 et 28 latéraux pourraient être omis, ainsi que le raccord supérieur 26, et le conduit d'alimentation 23 et le conduit de sortie 24 se brancheraient alors tous deux à des extrémités opposées du conduit central 25 en s'étendant dans le carter intérieur 3 pour l'un, dans le carter extérieur 4 pour l'autre.

Il est préconisé, au moins pour la partie 29 de hauteur de l'aube 15, que le conduit central 25 s'étende dans la région centrale 40 et donc entre la portion centrale de la face d'extrados 16 et l'axe principal d'inertie Iz, afin que les dilatations thermiques les plus importantes produites par la chaleur cédée par l'huile bénéficient aux régions de l'aube 15 qui subissent le plus la compression produite par les efforts aérodynamiques. Les conduits latéraux 27 et 28, étant parcourus par de l'huile déjà refroidie, exercent des dilatations thermiques moins importantes : il est donc indiqué que ces dilatations soient situées à des endroits de l'aube 15 qui, étant en moyenne plus proches de l'axe principal Iz, voire du côté opposé de cet axe, subissent moins de compression produite par la flexion aérodynamique ou subissent au contraire une extension. C'est pourquoi, il est avantageux que les conduits latéraux 27 et 28 s'étendent dans les régions extrêmes 41 et 42. L'axe principal d'inertie Iz pour lequel le moment d'inertie quadratique de la section est minimal, et la résistance de l'aube 15 à la flexion et à cette section est aussi minimale, sépare donc parfaitement le conduit central 25 des conduits latéraux 27 et 28 de retour de fluide caloporteur. Avantageusement, le conduit central 25 occupe la plus grande partie de la superficie de la région centrale 40 ; et les conduits latéraux 27 et 28 peuvent occuper la plus grande partie des superficies des régions extrêmes 41 et 42 respectives.

Des cloisons relativement minces et d'épaisseur uniforme délimitent l'aube 15 et séparent les conduits 25, 27 et 28. Une de ces cloisons 43 sépare le conduit central 25 du conduit latéral 27 situé vers le bord d'attaque 17, l'autre de ces cloisons 44 sépare le conduit central 25 de l'autre conduit latéral 28, situé vers le bord de fuite 18. Les cloisons 42 et 43 s'étendent, dans cette réalisation, à peu près dans le prolongement l'une de l'autre et à l'endroit de l'axe principal Iz. Ainsi, le conduit central 25 s'étend exclusivement dans le côté de l'aube 15 qui subit la compression. Dans cette réalisation, les conduits latéraux 27 et 28 s'étendent de l'autre côté de l'axe Iz. Ils pourraient aussi occuper une partie de la région centrale 40.

Les différents conduits 25, 27 et 28 pourraient tous être divisés en plusieurs conduits parallèles. Dans la réalisation représentée, ils sont tous rectilignes, ce qui n'est pas indispensable. Les épaisseurs de parois de l'aube 15 sont identiques du côté de l'extrados 16 et du côté de l'intrados 19 pour les différents conduits 25, 26 et 27, ce qui n'est pas non plus indispensable, et le conduit central 25 pourrait par exemple être plus proche de l'extrados 16.

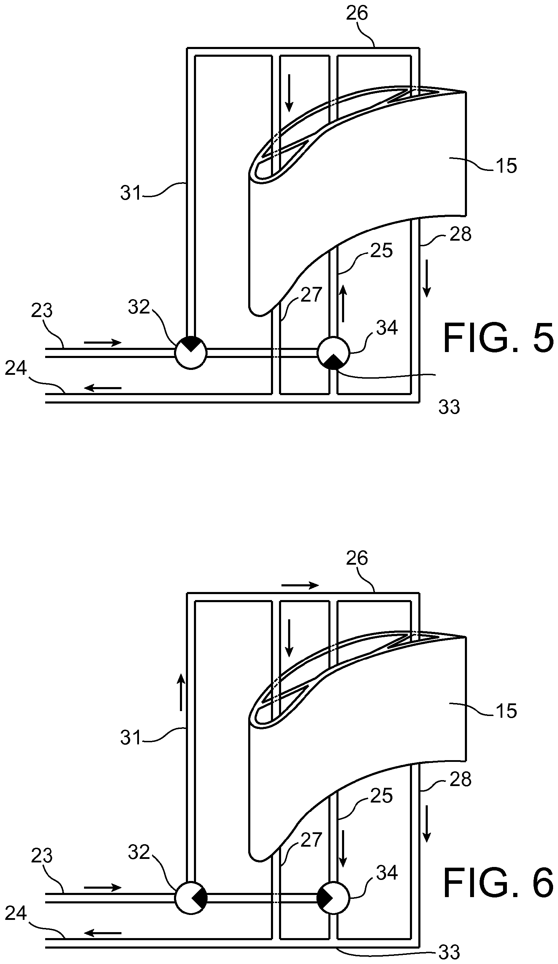

On voit que l'effet technique de l'invention est produit surtout par le conduit central 25, les conduits latéraux 27 et 28 n'étant pas indispensables (ou pouvant être laissés vides d'huile). On peut alors proposer un agencement un peu plus complexe, représenté aux figures 5 et 6, pour produire à volonté un mode de fonctionnement différent, dans lequel la dilatation thermique différentielle n'est pas exploitée. En se reportant aux figures 5 et 6, le circuit d'huile précédent est complété par une dérivation 31, reliant au raccord supérieur 26 l'un des conduits d'alimentation 23 et de sortie 24 par une première vanne 32 ; un raccord inférieur 33 entre les conduits 25, 27 et 28, à l'extrémité opposée au raccord supérieur 26 est ajouté ; et une deuxième vanne 34, installée sur le même conduit d'alimentation 23 ou de sortie 24 que la première vanne 32, est disposée à la jonction du conduit qui le prolonge dans l'aube 15 (ici le conduit central 25) du raccord inférieur 33. Ici aussi, « supérieur » et « inférieur » font référence à l'orientation des figures 3, 5 et 6 et équivalent à « plus proche du carter extérieur 4 » et « plus proche du carter intérieur 3 » respectivement.

A l'état de la figure 5, la première vanne 32 ferme la dérivation 31 et la seconde vanne 34 ferme la communication entre le conduit central 25 et le raccord inférieur 33 : le fonctionnement est le même que précédemment, avec des circulations d'huile inverses entre le conduit central 25 et les conduits latéraux 27 et 28, les vannes 32 et 34 permettant la circulation du conduit d'alimentation 23 vers le conduit central 25. Mais à l'état de la figure 6 où les deux vannes 32 et 34 sont commutées, l'huile chaude est envoyée dans la dérivation 31, puis dans le raccord supérieur 26, avant de s'écouler dans le même sens, vers le bas de la figure, dans les trois conduits 25, 27 et 28. La seconde vanne 34 permet alors une communication entre le conduit central 25 et le raccord inférieur 33, ce qui permet à l'huile ayant parcouru le conduit central 25 de parvenir directement au conduit de sortie 24.

L'invention a été décrite en liaison à un circuit de lubrification à l'huile. Elle pourrait être mise en pratique avec d'autres fluides caloporteurs, sans changement de forme de l'aube 15, qui offriraient la même relation d'échange de chaleur.

## Revendications

1. Aube (15) fixe de redresseur d'une soufflante (12) de turbomachine, comprenant deux extrémités (20, 21) opposées destinées à être montées sur un carter intérieur (3) et un carter extérieur (4), concentrique au carter intérieur, de la turbomachine, l'aube étant creuse et parcourue par un conduit principal (25) de circulation d'un fluide caloporteur refroidi en circulant dans l'aube, et s'étendant, à partir d'une entrée du fluide (23) à une première des extrémités (20) de l'aube, dans au moins une partie (29) de hauteur de l'aube, l'aube étant composée de sections, chacune à une position uniforme dans une direction radiale (R) de la turbomachine, les sections étant chacune composées d'une région centrale (40) et d'au moins une région extrême (41, 42) de part et d'autre d'un axe principal d'inertie (Iz) de flexion de la section, la région extrême (41, 42) incluant un bord d'attaque (17) et un bord de fuite (18) de l'aube, **caractérisée en ce que**, dans chaque section d'aube de la partie de hauteur de l'aube, le conduit principal (25) s'étend seulement dans la région centrale (40), ledit axe principal d'inertie (Iz) étant un axe autour duquel la section a un moment quadratique d'inertie minimal et l'aube (15) a une rigidité en flexion la plus petite ; l'aube est aussi parcourue, dans la partie de hauteur de l'aube, par des conduits latéraux (27, 28) de circulation du fluide s'étendant entre le conduit principal et, respectivement, le bord d'attaque (17) et le bord de fuite (18) de l'aube, les conduits latéraux s'étendant entre une sortie du fluide (24) et un premier raccord (26), joignant des extrémités des conduits latéraux à une extrémité du conduit principal, et les conduits latéraux (27, 28) s'étendent, dans chaque section de la partie de hauteur de l'aube, dans ladite région extrême (41, 42).

2. Redresseur (14) de soufflante de turbomachine, comprenant un étage composé d'aubes (15) selon la revendication précédente.

3. Redresseur selon la revendication 2, **caractérisé en ce qu'**il comprend un agencement (31, 32, 33, 34) d'inversion de sens de circulation d'huile soit dans le conduit principal, soit dans les conduits latéraux.

4. Turbomachine, comprenant une veine secondaire (6) et au moins une aube fixe selon la revendication 1.

5. Turbomachine, comprenant une soufflante (12) et le redresseur selon la revendication 3, immédiatement en aval de la soufflante.

## Patentansprüche

1. Feststehende Schaufel (15) für einen Gleichrichter eines Gebläses (12) einer Turbomaschine, umfassend zwei gegenüberliegende Enden (20, 21), die an einem Innengehäuse (3) und einem zum Innengehäuse konzentrischen Außengehäuse (4) der Turbomaschine angebracht werden sollen, wobei die Schaufel hohl ist und von einem Hauptkanal (25) für die Zirkulation eines Wärmeträgerfluids, das durch Zirkulation in der Schaufel gekühlt wird, durchzogen wird und sich in mindestens einem Teil (29) der Schaufelhöhe von einem Fluideinlass (23) zu einem ersten der Enden (20) der Schaufel erstreckt, wobei die Schaufel aus Abschnitten besteht, die jeweils eine einheitliche Position in einer radialen Richtung (R) der Turbomaschine haben, wobei die Abschnitte jeweils aus einem zentralen Bereich (40) und mindestens einem Endbereich (41, 42) auf beiden Seiten einer Hauptträgheitsachse (Iz) der Biegung des Abschnitts bestehen, wobei der Endbereich (41, 42) eine Vorderkante (17) und eine Hinterkante (18) der Schaufel enthält, **dadurch gekennzeichnet, dass** der Hauptkanal (25) sich nur im zentralen Bereich (40) in jedem Schaufelabschnitt des Teils der Schaufelhöhe erstreckt, wobei die Hauptträgheitsachse (Iz) eine Achse ist, um die der Abschnitt ein minimales quadratisches Trägheitsmoment hat und die Schaufel (15) die geringste Biegesteifigkeit hat; wobei die Schaufel auch im Teil der Schaufelhöhe von seitlichen Fluidzirkulationskanälen (27, 28) durchzogen wird, die sich zwischen dem Hauptkanal und der Vorderkante (17) bzw. der Hinterkante (18) der Schaufel erstrecken, wobei sich die seitlichen Kanäle zwischen einem Fluidauslass (24) und einem ersten Anschluss (26) erstrecken, der Enden der seitlichen Kanäle mit einem Ende des Hauptkanals verbindet, und die seitlichen Kanäle (27, 28) sich in jedem Abschnitt des Teils der Schaufelhöhe in dem Endbereich (41, 42) erstrecken.

2. Gleichrichter (14) für das Gebläse einer Turbomaschine, umfassend eine Stufe, die aus Schaufeln (15) nach dem vorhergehenden Anspruch besteht.

3. Gleichrichter nach Anspruch 2, **dadurch gekennzeichnet, dass** er eine Anordnung (31, 32, 33, 34) zur Umkehr der Richtung der Ölzirkulation entweder im Hauptkanal oder in den seitlichen Kanälen umfasst.

**4.** Turbomaschine, umfassend einen Sekundärstrom (6) und mindestens eine feststehende Schaufel nach Anspruch 1.

**5.** Turbomaschine, umfassend ein Gebläse (12) und den Gleichrichter nach Anspruch 3, unmittelbar stromabwärts des Gebläses.

**Claims**

**1.** Guide vane (15) for a turbomachine fan (12), comprising two opposite ends (20, 21) intended to be mounted on an internal casing (3) and an external casing (4), concentric with the internal casing, of the turbomachine, the vane being hollow and traversed by a main conduit (25) of heat transfer fluid circulation cooled circulating into the guided vane extending, from a fluid inlet (23) at a first of the vane ends (20), into at least a height portion (29) of the vane, the vane being composed of sections, each at a uniform position in a radial direction (R) of the turbomachine, the sections being each composed of a central region (40) and at least one end region (41, 42) on either side of a principal axis of flexural inertia (Iz) of the section, the end region (41, 42) including a leading edge (17) and a trailing edge (18) of the vane, **characterised in that**, in each vane section of the height portion of the vane, the main conduit (25) extends merely in the central region (40), said principal axis of inertia (Iz) being an axis about which the section has a quadratic moment of inertia and the vane (15) has the lowest flexural rigidity, guide vane being also traversed, in the height portion of the vane, by lateral fluid circulation conduits (27, 28) between the main conduit and, respectively, the leading edge (17) and the trailing edge (18) of the vane, the lateral conduits extending between a fluid outlet (24) and a first coupling (26), joining the ends of the lateral conduits to an end of the main conduit, the lateral conduits (27, 28) extending, in each section of the height portion of the vane, into said end region (41, 42).

**2.** Guide section (14) for a turbomachine fan, comprising a stage composed of vanes (15) according to any one of the preceding claims.

**3.** Guide section according to claim 2, **characterised in that** it comprises an oil circulation direction inversion arrangement (31, 32, 33, 34) either in the main conduit, or in the lateral conduits.

**4.** Turbomachine, comprising a secondary stream (6) and at least one guide vane according to claim 1.

**5.** Turbomachine, comprising a fan (12) and the guide section according to claim5, immediately downstream from the fan.

# FIG. 1

# FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0238938 A1
- US 2014165570 A1
- EP 3179048 A1
- US 2017284417 A1